# EUROPEAN PATENT APPLICATION

(11) **EP 2 131 571 A1**
(43) Date of publication of application: **09.12.2009**
(21) Application number: 08157814.8
(22) Date of filing: 06.06.2008
(51) Int. Cl.: H04N 5/225, H04N 5/74

(54) **Digital video camera with projector mechanism**

(71) Applicant: Life Technologies co., LTD, Taipei City 114 (TW)
(72) Inventor: Chang, Chien-Wei, TAIPEI COUNTY 221 (TW)
(74) Representative: Negrini, Elena

(57) **Abstract**

A digital video (DV) camera with projector mechanism includes a DV camera having a processing unit provided in an enclosure, and a shooting unit, an audio input/output unit, a storage unit, a display unit, an operating interface unit, and a power supply unit mounted to the enclosure and electrically connected to the processing unit; and a projector mechanism being arranged in the enclosure at a suitable position and electrically connected to the processing unit. Dynamic pictures and still imaged shot using the DV camera may be output via the projector mechanism, so that a user may play back the shot dynamic pictures and still images directly from the DV camera to save the time required for image processing via a computer.

## Description

### FIELD OF THE INVENTION

The present invention relates to a digital video (DV) camera, and more particularly to a DV camera with projector mechanism that allows dynamic pictures and still images shot using the DV camera to be directly output via the projector mechanism for viewing without the need of image processing.

### BACKGROUND OF THE INVENTION

Generally, a conventional digital video (DV) camera can internally process and convert dynamic pictures or still images shot using the DV camera, and then stores the processed and converted pictures or images on a memory, so that a user may review the shot dynamic pictures or still images at a display on the DV camera. When it is desired to play back the shot dynamic pictures or still images on an external screen, the dynamic pictures or still images stored in the DV camera must be transmitted via a cable to a computer, and the computer is driven by related software to edit the dynamic pictures or still images using specific programs, so that the dynamic pictures or still images are converted into specific files and subjected to related processes, and finally recorded on a compact disk (CD). Then, the dynamic pictures or still images recorded on the compact disk are read using a CD ROM, and then played back on an external screen linked to the CD ROM.

While the dynamic pictures or still images shot using the DV camera can be played back on an external screen via a computer, the computer must first process the dynamic pictures or still images using related driver and editing software. That is, the user could not play back the shot dynamic pictures or still images in real time, and a lot of time is wasted in image processing via complicated procedures.

### SUMMARY OF THE INVENTION

A primary object of the present invention is to provide a DV camera with projector mechanism, so that dynamic pictures and still images shot using the DV camera can be directly output for viewing via a projector mechanism associated with the DV camera to save the time required for image processing.

To achieve the above and other objects, the DV camera with projector mechanism according to the present invention includes a processing unit provided in an enclosure, and a shooting unit, an audio input/output unit, a storage unit, a display unit, an operating interface unit, and a power supply unit mounted to the enclosure and electrically connected to the processing unit; and a projector mechanism being arranged in the enclosure at a suitable position and electrically connected to the processing unit of the DV camera.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein

Fig. 1 is an exploded perspective view of a DV camera with projector mechanism according to an embodiment of the present invention;

Fig. 2 is an assembled view of Fig. 1;

Fig. 3 is a sectioned front view of Fig. 2;

Fig. 4 shows the use of the DV camera of the present invention for shooting pictures;

Fig. 5 shows the use of the DV camera of the present invention to compose a shot or review images; and

Fig. 6 shows the use of the DV camera of the present invention to play back shot images via a projector mechanism associated with the DV camera.

### DETAILED DESCRIPTION OF THE PREFERRED EMBODIMENTS

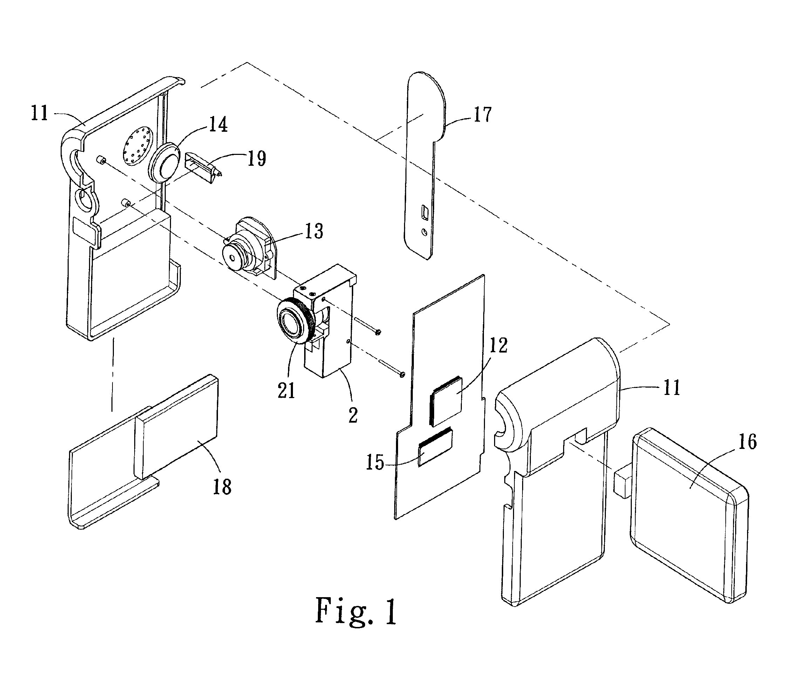

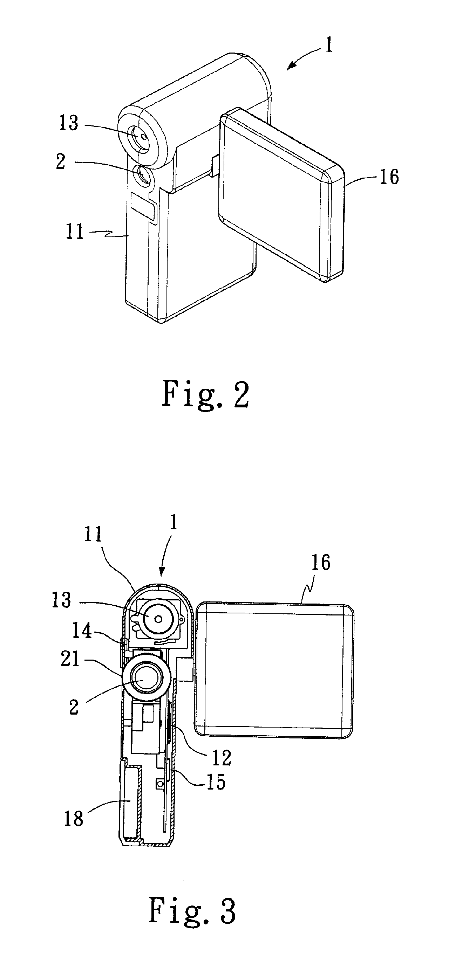

Please refer to Fig. 1 and 2 that are exploded and assembled perspective views, respectively, of a digital video (DV) camera with projector mechanism according to an embodiment of the present invention, and to Fig. 3 that is a sectioned front view of Fig. 2. As shown, the DV camera with projector mechanism according to the present invention includes a DV camera 1 and a projector mechanism 2.

The DV camera 1 has an enclosure 11, in which a processing unit 12 is provided. At least a shooting unit 13, an audio input/output unit 14, a storage unit 15, a display unit 16, an operating interface unit 17, and a power supply unit 18 are mounted to the enclosure 11 to electrically connect to the processing unit 12. The shooting unit 13 may be located at a front side of the enclosure 11, the audio input/output unit 14 may be arranged on the enclosure 11 close to the shooting unit 13, the storage unit 15 may include an internal memory and/or an external memory card, the display unit 16 may be provided to one lateral side of the enclosure 11, the operating interface unit 17 may be arranged at a rear side of the enclosure 11 or associated with the display unit 16 to form a touch panel, and the power supply unit 18 may be provided to the other lateral side of the enclosure 11. Alternatively, an auxiliary light source 19 may be arranged on the enclosure 11 close to the shooting unit 13 to electrically connect to the processing unit 12. It is understood the shooting unit 13, the audio input/output unit 14, the storage unit 15, the display unit 16, the operating interface unit 17, and the power supply unit 18 may be otherwise arranged on the enclosure 11 at different positions according to actual need.

The projector mechanism 2 is electrically connected to the processing unit 12 of the DV camera 1, and is arranged in the enclosure 11 at a suitable place, such as the front side, the rear side, or one lateral side of the enclosure 11, depending on actual need. The projector mechanism 2 may include an image adjusting unit 21.

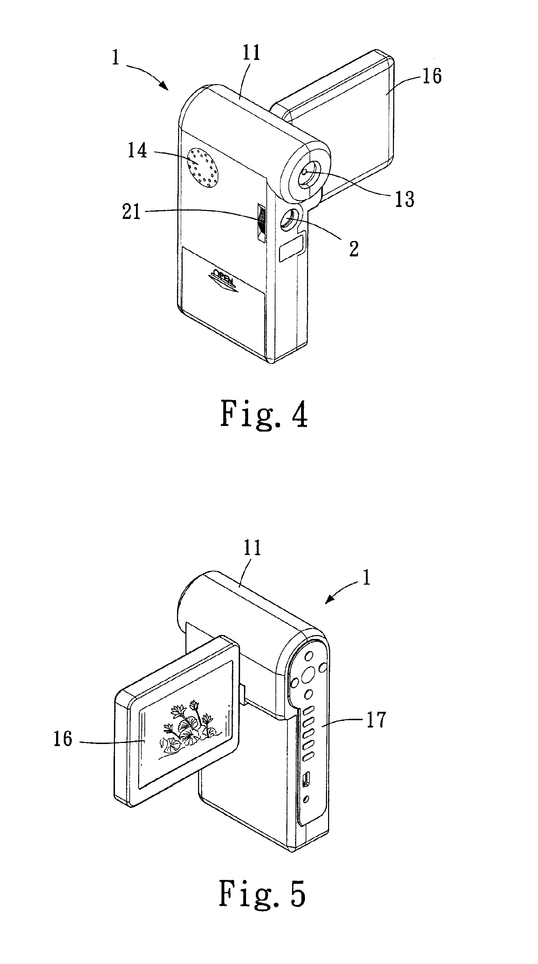

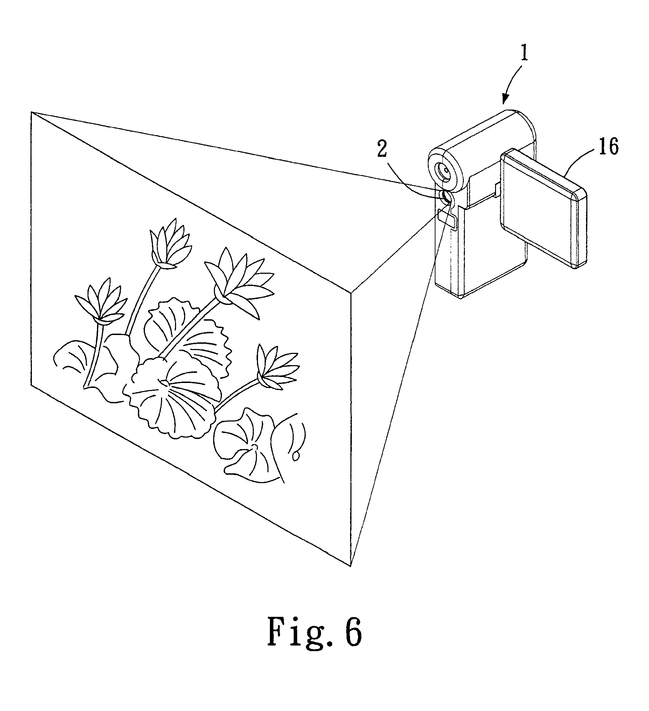

Figs. 4, 5 and 6 show the use of the DV camera with projector mechanism according to the present invention to shoot pictures via the shooting unit 13, to compose a shot or review shot images via the display unit 16, and to play back images via the projector mechanism 2, respectively. As shown, to use the present invention, a user may use the operating interface unit 17 to set the DV camera 1 to a desired shooting mode and other related settings, and then use the shooting unit 13 and the audio input/output unit 14 to shoot dynamic pictures or still images. Thereafter, related processing and conversion are carried out by the processing unit 12, so that the dynamic pictures or still images shot using the DV camera 1 are converted into a required read format and stored on the storage unit 15. At this point, the user may control the operating interface unit 17 to output the dynamic pictures or still images at the display unit 16 for reviewing. Alternatively, the user may control the operating interface unit 17 to output the dynamic pictures or still images via the projector mechanism 2, so that the dynamic pictures or still images are projected onto an external screen for viewing. Meanwhile, a corresponding sound effect may be output via the audio input/output unit 14. The user may also use the image adjusting unit 21 to focus the images projected using the projector mechanism 2. Therefore, the DV camera 1 cooperates with the projector mechanism 2 to provide the functions of directly playing back dynamic pictures or still images without the need of a computer and saving the time for image processing.

The present invention has been described with a preferred embodiment thereof and it is understood that many changes and modifications in the described embodiment can be carried out without departing from the scope and the spirit of the invention that is intended to be limited only by the appended claims.

## Claims

1. A digital video (DV) camera with projector mechanism, comprising:
a DV camera having an enclosure, a processing unit provided in the enclosure, and a shooting unit, an audio input/output unit, a storage unit, a display unit, an operating interface unit, and a power supply unit mounted to the enclosure and electrically connected to the processing unit; and
a projector mechanism being mounted in the enclosure at a predetermined position and electrically connected to the processing unit of the DV camera.

2. The DV camera with projector mechanism as claimed in claim 1, wherein the shooting unit is located at a front side of the enclosure.

3. The DV camera with projector mechanism as claimed in claim 1, wherein the audio input/output unit is arranged on the enclosure close to the shooting unit.

4. The DV camera with projector mechanism as claimed in claim 1, wherein the storage unit is selected from the group consisting of an internal memory, an external memory card, and a combination thereor.

5. The DV camera with projector mechanism as claimed in claim 1, wherein the display unit is arranged to one lateral side of the enclosure.

6. The DV camera with projector mechanism as claimed in claim 1, wherein the operating interface unit is arranged at a rear side of the enclosure.

7. The DV camera with projector mechanism as claimed in claim 1, wherein the operating interface unit is associated with the display unit.

8. The DV camera with projector mechanism as claimed in claim 1, wherein the power supply unit is located at one lateral side of the enclosure.

9. The DV camera with projector mechanism as claimed in claim 1, wherein the projector mechanism is arranged on the enclosure at a position selected from the group consisting of a front side, a rear side, and a lateral side of the enclosure.

10. The DV camera with projector mechanism as claimed in claim 1, wherein the projector mechanism includes an image adjusting unit.
